# EUROPEAN PATENT APPLICATION

(11) **EP 4 451 204 A1**
(43) Date of publication of application: **23.10.2024**
(21) Application number: 23746162.9
(22) Date of filing: 18.01.2023
(51) Int. Cl.: G06T 1/20

(54) **METHOD FOR RENDERING IMAGE AND RELATED APPARATUS**

(30) Priority: 29.01.2022 CN 202210112188
(71) Applicant: Huawei Technologies Co., Ltd., Shenzhen, Guangdong 518129 (CN)
(72) Inventor: SHANG, Qin, Shenzhen, Guangdong 518129 (CN); YUAN, Zhiwei, Shenzhen, Guangdong 518129 (CN); JIANG, Zecheng, Shenzhen, Guangdong 518129 (CN)
(74) Representative: Epping - Hermann - Fischer
(86) International application number: PCT/CN2023/072780
(87) International publication number: WO 2023/143280

(57) **Abstract**

Embodiments of this application provide an image rendering method and a related apparatus. The method includes: determining, based on a graphics application programming interface instruction, whether a first render pass used to render to-be-rendered data meets a preset condition; and if the first render pass meets the preset condition, replacing a frame buffer bound to the first render pass, rendering the to-be-rendered data by using the first render pass in which the frame buffer is replaced, and obtaining output data of a vertex shader in the first render pass in which the frame buffer is replaced. Resolution that exists after replacement is less than resolution that exists before replacement, and/or a size of storage space occupied by a single pixel in a frame buffer that exists after replacement may be less than a size of storage space occupied by a single pixel in the frame buffer that exists before replacement. The resolution includes resolution of a frame buffer, resolution of a color attachment, and resolution of a depth attachment. In the foregoing technical solution, GPU hardware overheads can be reduced without affecting a rendering result.

## Description

This application claims priority to Chinese Patent Application No. 202210112188.3, filed with the China National Intellectual Property Administration on January 29, 2022 and entitled "IMAGE RENDERING METHOD AND RELATED APPARATUS", which is incorporated herein by reference in its entirety.

### TECHNICAL FIELD

Embodiments of this application relate to the image processing field, and more specifically, to an image rendering method and a related apparatus.

### BACKGROUND

A structure of a central processing unit (central processing unit, CPU) mainly includes an arithmetic and logic unit (arithmetic and logic unit, ALU), a control unit (control unit, CU), a register (register), a cache, and data, control, and status buses for communication between the ALU, the CU, the register, and the cache. The CPU has a capability of processing different types of data and is highly universal. The CPU has a complex internal structure. The CPU is specialized in tasks of programs such as an operating system, system software, and a general-purpose application that have complex instruction scheduling, loops, branches, logic determining, and execution.

A graphics processing unit (graphics processing unit, GPU) includes a large quantity of computing units and an ultra-long pipeline, and is suitable for processing a large amount of data in a uniform type. The GPU excels in highly parallel numerical computing in either a graphical type or a nongraphical type.

For some computing tasks, when the CPU encounters a performance bottleneck, some computations may be migrated to a GPU side to relieve pressure on a CPU side.

A common skinning operation in image processing is used as an example. Skinning is a process of binding a modeled surface to a skeleton. Any model may be bound to the skeleton through skinning, or skin may be created by modeling over a pre-existing skeleton. When the model is bound to the skeleton through skinning, the skin follows or reacts to the transformations of the joints and bones of the skeleton. For example, if an arm of the model is bound to an underlying skeleton of the arm through skinning, rotating the elbow joints causes the skin at the elbow to crease or pucker. When there is a large quantity of models including skeletons on a same screen, a quantity of skeletons and a quantity of vertices will significantly increase the CPU computing workload. In this case, some computations may be migrated to the GPU side to relieve CPU performance pressure.

A compute shader (compute shader) is a program running on the GPU, and may run large parallel GPU algorithms, to obtain computing power many times faster than that of the CPU. The compute shader may be used to migrate a large number of parallel computations to the GPU, to save CPU resources.

However, modifying a compute shader program is a very complex task, and therefore is errorprone. In addition, the compute shader only supports open graphics library for embedded systems (open graphics library for embedded systems, OpenGL ES) 3.1 and later, and can support a limited quantity of devices.

### SUMMARY

Embodiments of this application provide an image rendering method and a related apparatus, to reduce hardware overheads.

According to a first aspect, an embodiment of this application provides an image rendering method, including: determining, based on a graphics application programming interface instruction, whether a first render pass used to render to-be-rendered data meets a preset condition; and if the first render pass meets the preset condition, replacing a frame buffer bound to the first render pass, rendering the to-be-rendered data by using the first render pass in which the frame buffer is replaced (this first render pass is also referred to as a second render pass), and directly obtaining output data of each fragment shader in the second render pass. Before the frame buffer is replaced, the frame buffer bound to the first render pass may be referred to as a first frame buffer, and a frame buffer used to replace the first frame buffer may be referred to as a second frame buffer. Resolution of the second frame buffer may be less than resolution of the first frame buffer and resolution of a color attachment and resolution of a depth attachment of the second frame buffer are less than or equal to the resolution of the second frame buffer, and/or a size of storage space occupied by a single pixel in the second frame buffer may be less than a size of storage space occupied by a single pixel in the first frame buffer.

In the foregoing technical solution, for the first optimizable render pass, output data of a vertex shader of a graphics pipeline in the first render pass may be directly obtained. In addition, a computation result of a fragment shader in each graphics pipeline in the first render pass does not affect data (in other words, the output data of the vertex shader) that is expected to be obtained. Therefore, if the resolution of the second frame buffer is less than the resolution of the first frame buffer, a quantity of computations performed by the fragment shader may be reduced, to reduce computational overheads. Resolution of a color attachment of a frame buffer and resolution of a depth attachment of the frame buffer are usually less than or equal to resolution of the frame buffer. Therefore, if a frame buffer with lower resolution is bound, resolution of a color attachment and resolution of a depth attachment are correspondingly adjusted to be less than or equal to resolution of a newly bound frame buffer. In this way, correspondingly, fewer pixels need to be read from a memory. This can reduce meaningless memory read and write overheads. In addition, if the size of the storage space occupied by the single pixel in the second frame buffer is less than the size of the storage space occupied by the single pixel in the first frame buffer, the fragment shader correspondingly reads less data of the single pixel from the memory. This may also reduce the meaningless memory read and write overheads. Therefore, in the foregoing technical solution, GPU hardware overheads can be reduced without affecting a rendering result.

With reference to the first aspect, in a possible implementation of the first aspect, the resolution of the second frame buffer is 1×1, the resolution of the color attachment of the second frame buffer is 1×1, and the resolution of the depth attachment of the second frame buffer is 1×1.

A size of the second frame buffer is equal to the quantity of computations performed by the fragment shader. Moreover, the computation result of the fragment shader does not affect the output data that is expected to be obtained. Therefore, the resolution of the second frame buffer may be reduced as much as possible, to reduce the quantity of computations of the fragment shader. If the resolution of the second frame buffer is 1×1, the fragment shader only needs to run once. In this way, GPU computational overheads can be greatly reduced. In addition, if the resolution of the color attachment of the second frame buffer is 1×1, a color value of only one pixel needs to be read from the memory. If the resolution of the depth attachment of the second frame buffer is 1×1, a depth value of only one pixel needs to be read from memory. This can reduce the meaningless memory read and write overheads.

With reference to the first aspect, in a possible implementation of the first aspect, a size of storage space occupied by a color value of a single pixel in the color attachment of the second frame buffer is less than a size of storage space occupied by a color value of a single pixel in a color attachment of the first frame buffer, and/or a size of storage space occupied by a depth value of a single pixel in the depth attachment of the second frame buffer is less than a size of storage space occupied by a depth value of a single pixel in a depth attachment of the first frame buffer.

With reference to the first aspect, in a possible implementation of the first aspect, the determining that a first render pass used to render to-be-rendered data meets a preset condition includes: determining that the first render pass is one of render passes included in a render pass trustlist. With reference to the first aspect, in a possible implementation of the first aspect, resolution of a viewport of the first render pass is not less than preset resolution. The frame buffer bound to the first render pass includes a color attachment. A shader program used by each draw call in the first render pass is optimizable, where the shader program corresponds to one fragment shader and one vertex shader. Each draw call in the first render pass corresponds to a preset instruction.

With reference to the first aspect, in a possible implementation of the first aspect, the preset instruction includes a point mode setting instruction and a vertex data write-back instruction. The point mode setting instruction indicates that a type of a to-be-rendered primitive is a point, and the vertex data write-back instruction is used to obtain and store output data of the vertex shader. With reference to the first aspect, in a possible implementation of the first aspect, the fragment shader has only one output variable whose assigned value is a fixed color value or a constant. The fragment shader does not have an input variable. The fragment shader does not use a conditional statement. The fragment shader does not have a uniform variable and a uniform buffer obj ect UBO. The fragment shader does not use a texture modified by a two-dimensional sampler and does not use a sampler.

With reference to the first aspect, in a possible implementation of the first aspect, the vertex shader includes a plurality of input variables. The vertex shader further includes a plurality of output variables. The vertex shader further includes a conditional statement.

According to a second aspect, an embodiment of this application further provides an electronic apparatus. The electronic apparatus includes a central processing unit CPU and a graphics processing unit GPU. The CPU is configured to determine, based on a graphics application programming interface API instruction, that a first render pass used to render to-be-rendered data meets a preset condition. The CPU is further configured to replace a first frame buffer as a frame buffer bound to the first render pass with a second frame buffer. Resolution of the second frame buffer is less than resolution of the first frame buffer and resolution of a color attachment and resolution of a depth attachment of the second frame buffer are less than or equal to the resolution of the second frame buffer, and/or a size of storage space occupied by a single pixel in the second frame buffer is less than a size of storage space occupied by a single pixel in the first frame buffer. The GPU is configured to render the to-be-rendered data by using a second render pass, and obtain output data of a vertex shader in the second render pass. The second render pass is the first render pass in which the bound frame buffer is replaced with the second frame buffer.

Optionally, in some embodiments, the electronic apparatus may be a computer device. The computer device may be a computer device, for example, a personal computer, a notebook computer, a tablet computer, or a mobile phone.

Optionally, in some other embodiments, the electronic apparatus may be a chip or a system-on-chip.

In the foregoing technical solution, for the first optimizable render pass, output data of a vertex shader of each of a plurality of graphics pipelines in the first render pass may be directly obtained. In addition, a computation result of a fragment shader in each graphics pipeline in the first render pass does not affect data (in other words, the output data of the vertex shader) that is expected to be obtained. Therefore, if the resolution of the second frame buffer is less than the resolution of the first frame buffer, a quantity of computations performed by the fragment shader may be reduced, to reduce computational overheads. Resolution of a color attachment of a frame buffer and resolution of a depth attachment of the frame buffer are usually less than or equal to resolution of the frame buffer. Therefore, if a frame buffer with lower resolution is bound, resolution of a color attachment and resolution of a depth attachment are correspondingly adjusted to be less than or equal to resolution of a newly bound frame buffer. In this way, correspondingly, fewer pixels need to be read from a memory. This can reduce meaningless memory read and write overheads. In addition, if the size of the storage space occupied by the single pixel in the second frame buffer is less than the size of the storage space occupied by the single pixel in the first frame buffer, the fragment shader correspondingly reads less data of the single pixel from the memory. This may also reduce the meaningless memory read and write overheads. Therefore, in the foregoing technical solution, GPU hardware overheads can be reduced without affecting a rendering result. With reference to the second aspect, in a possible implementation of the second aspect, the resolution of the second frame buffer is 1×1, the resolution of the color attachment of the second frame buffer is 1×1, and the resolution of the depth attachment of the second frame buffer is 1×1. A size of the second frame buffer is equal to the quantity of computations performed by the fragment shader. Moreover, the computation result of the fragment shader does not affect the output data that is expected to be obtained. Therefore, the resolution of the second frame buffer may be reduced as much as possible, to reduce the quantity of computations of the fragment shader. If the resolution of the second frame buffer is 1×1, the fragment shader only needs to run once. In this way, GPU computational overheads can be greatly reduced. In addition, if the resolution of the color attachment of the second frame buffer is 1×1, a color value of only one pixel needs to be read from the memory. If the resolution of the depth attachment of the second frame buffer is 1×1, a depth value of only one pixel needs to be read from memory. This can reduce the meaningless memory read and write overheads.

With reference to the second aspect, in a possible implementation of the second aspect, a size of storage space occupied by a color value of a single pixel in the color attachment of the second frame buffer is less than a size of storage space occupied by a color value of a single pixel in a color attachment of the first frame buffer, and/or a size of storage space occupied by a depth value of a single pixel in the depth attachment of the second frame buffer is less than a size of storage space occupied by a depth value of a single pixel in a depth attachment of the first frame buffer. With reference to the second aspect, in a possible implementation of the second aspect, the CPU is specifically configured to determine that the first render pass is one of render passes included in a render pass trustlist.

With reference to the second aspect, in a possible implementation of the second aspect, resolution of a viewport of the first render pass is not less than a preset resolution threshold. The frame buffer bound to the first render pass includes a color attachment. A shader program used by each draw call in the first render pass is optimizable, where the shader program corresponds to one fragment shader and one vertex shader. Each draw call in the first render pass corresponds to a preset instruction.

With reference to the second aspect, in a possible implementation of the second aspect, the preset instruction includes a point mode setting instruction and a vertex data write-back instruction. The point mode setting instruction indicates that a type of a to-be-rendered primitive is a point, and the vertex data write-back instruction is used to obtain and store output data of the vertex shader. With reference to the second aspect, in a possible implementation of the second aspect, the fragment shader has only one output variable whose assigned value is a fixed color value or a constant. The fragment shader does not have an input variable. The fragment shader does not use a conditional statement. The fragment shader does not have a uniform variable and a uniform buffer object UBO. The fragment shader does not use a texture modified by a two-dimensional sampler and does not use a sampler.

With reference to the second aspect, in a possible implementation of the second aspect, the vertex shader includes a plurality of input variables. The vertex shader further includes a plurality of output variables. The vertex shader further includes a conditional statement.

According to a third aspect, an embodiment of this application provides a chip system. The chip system includes a logic circuit. The logic circuit is configured to be coupled to an input/output interface, and transmit data through the input/output interface, to perform the implementation according to any one of the first aspect or the possible implementations of the first aspect. According to a fourth aspect, an embodiment of this application provides a computer device. The computer device includes a unit configured to perform the implementation according to any one of the first aspect or the possible implementations of the first aspect.

According to a fifth aspect, an embodiment of this application provides a computer-readable storage medium. The computer-readable storage medium stores program code. When the computer storage medium is run on a computer, the computer is enabled to perform the implementation according to any one of the first aspect or the possible implementations of the first aspect. According to a sixth aspect, an embodiment of this application provides a computer program product. The computer program product includes computer program code. When the computer program code is run on a computer, the computer is enabled to perform the implementation according to any one of the first aspect or the possible implementations of the first aspect.

### BRIEF DESCRIPTION OF DRAWINGS

FIG. 1 is a diagram of a render pass included in a frame of image;
FIG. 2 is a diagram of draw calls included in a render pass RenderPass 0;
FIG. 3 is a diagram of draw calls included in a render pass RenderPass 5;
FIG. 4 is a schematic flowchart of a graphics pipeline;
FIG. 5 is a diagram of a sub-pipeline of a geometry phase;
FIG. 6 is a diagram of a system architecture according to an embodiment of this application;
FIG. 7 is a diagram of a structure of a computer device 100;
FIG. 8 is a schematic flowchart of an image rendering method according to an embodiment of this application;
FIG. 9 is a schematic flowchart of determining a render pass trustlist according to an embodiment of this application;
FIG. 10 is another flowchart of identifying an optimizable render pass according to an embodiment of this application;
FIG. 11 is a schematic flowchart of an image rendering method according to an embodiment of this application;
FIG. 12 shows a process of determining a shader program trustlist;
FIG. 13 is a diagram of generating skin data by using a skin render pass; and
FIG. 14 is a flowchart of completing character drawing in a main scene render pass based on skin data generated by using a skin render pass.

### DESCRIPTION OF EMBODIMENTS

The following describes technical solutions of embodiments in this application with reference to accompanying drawings.

To help a person skilled in the art better understand the technical solutions in this application, some related technologies in this application are first described.

### 1. Open graphics library (OpenGL)

OpenGL is a cross-platform graphics application programming interface (application programming interface, API) configured to specify a standard software interface for 3D graphics processing hardware. OpenGL ES is an OpenGL specification for embedded devices. An Android (Android) system is used as an example. An OpenGL ES version and a supported Android system are shown in the table 1.

**Table 1**

| OpenGL ES version | Android system |
|---|---|
| OpenGL ES 1.0 and 1.1 | Android 1.0 or later |
| OpenGL ES 2.0 | Android 2.2 or later |
| OpenGL ES 3.0 | Android 4.3 or later |
| OpenGL ES 3.1 | Android 5.0 or later |

As shown in the table 1, OpenGL ES 3.1 supports only Android 5.0 and later versions. Therefore, devices with versions earlier than Android 5.0 cannot use a compute shader to migrate some computations to a GPU side to relieve pressure on a CPU side.

### 2. Rendering

Rendering (render) means a process of generating an image based on a model by software. The model is descriptions for a three-dimensional object or a virtual scene in a strictly defined language or data structure. The descriptions include geometry, viewpoint, texture, lighting, and shading information.

### 3. Render pass

A render pass (render pass) is a process of rendering a to-be-rendered object. In other words, the render pass is a set of rendering instructions submitted by an application to a graphics processing unit at one time. One render pass may include one draw call or may include a plurality of draw calls. The draw call is used to transfer settings such as vertex data, textures, materials, and lights to the GPU.

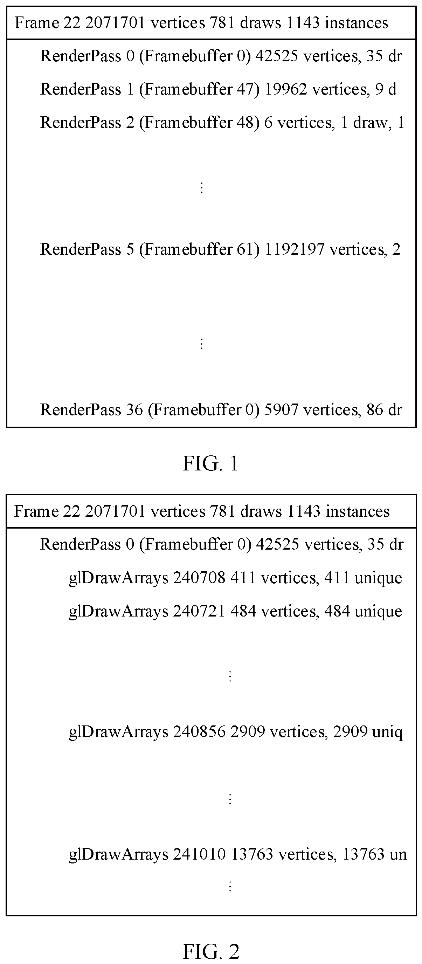

For example, FIG. 1 shows a render pass included in a frame of image.

A frame of image shown in FIG. 1 includes 37 render passes.

For example, a render pass RenderPass 0 is used to generate skin data. A render pass RenderPass 5 is used to draw a character using the skin data generated through the RenderPass 0. A render pass RenderPass 36 is used to display a rendered picture on a screen of a computer device.

FIG. 2 shows draw calls included in the render pass RenderPass 0.

As shown in FIG. 2, the render pass RenderPass 0 includes a plurality of draw calls. Different draw calls in the plurality of draw calls have different functions. For example, glDrawArrays 240856 is used to output skin data of a fountain in the image, and glDrawArrays 24101 is used to output the skin data of the character.

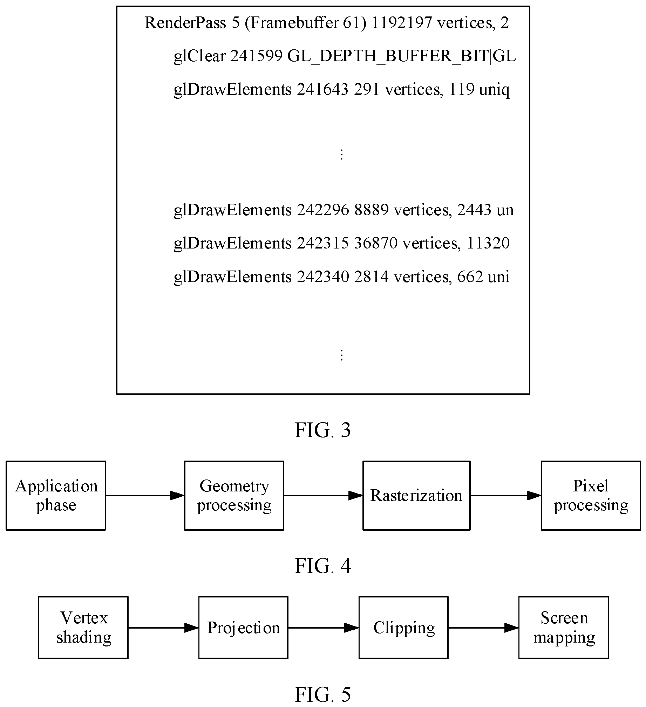

FIG. 3 shows draw calls included in the render pass RenderPass 5.

As shown in FIG. 3, the render pass RenderPass 5 includes a plurality of draw calls. Different draw calls in the plurality of draw calls have different functions. For example, glDrawElements 242296 is used to draw a hat of the character, glDrawElements 242315 is used to draw the body of the character, and glDrawElements 242340 is used to draw clothes of the character.

### 4. Graphics pipeline

A graphics pipeline (graphics pipeline) may also be referred to as a graphics render pipeline (graphics render pipeline) or a render pipeline (render pipeline). The graphics pipeline is a process in which a computer graphics system renders a three-dimensional model to two-dimensional screen. In short, the graphics pipeline is a process of converting raw graphics data (a model) into a picture displayed on the screen.

FIG. 4 is a schematic flowchart of a graphics pipeline.

The graphics pipeline shown in FIG. 4 may be divided into four phases: application (application), geometry processing (geometry processing), rasterization (rasterization), and pixel processing (pixel processing).

In each stage, there is also usually a pipeline system, including sub-pipeline phases.

The application phase is mainly executed on a CPU. A main task in the application phase is to transfer settings such as vertex data, maps, materials, and lights to the GPU. This process is referred to as a draw call (draw call).

A main task in the geometry phase is to convert vertices from three-dimensional space into two-dimensional coordinates on the screen.

FIG. 5 shows a sub-pipeline of a geometry phase.

As shown in FIG. 5, a sub-pipeline of the geometry phase includes the following phases: vertex shading (vertex shading), projection (projection), clipping (clipping), and screen mapping (screen mapping).

The vertex shading is used to implement operations such as model transformation, view transformation, projection transformation and illumination processing that are used to describe vertices in a graphics pipeline. The vertex shading may be used to complete operations such as a computation for a matrix transformation, a computation based on an illumination formula to generate vertex color, generation or transformation of texture coordinates. A program responsible for vertex shading may be referred to as a vertex shader. The vertex shader is programmable. After the vertex shader program outputs vertex coordinates, the vertices are assembled into primitives based on primitive type parameters in draw commands and vertex index arrays.

A main job in the projection phase is to convert the vertices from view space into vertices in clipping space.

The clipping phase is to convert the vertices from the clipping space into vertices in screen space. In the screen mapping phase, coordinates obtained through clipping are mapped to screen coordinates.

Rasterization mainly includes triangle setup (triangle setup) and triangle traversal (triangle traversal). The triangle setup is a process of computing a triangle mesh representation, and the triangle traversal is used for checking whether each pixel is covered by a triangle mesh. If the pixel is covered, the pixel generates a fragment (fragment).

The pixel processing mainly includes a fragment shader and per-fragment operations.

The fragment shader may also be referred to as a pixel shader (pixel shader). The fragment shader is used to output colors, and performs a computation for color mixing, to finally output a color value assignment of a pixel. In this way, the corresponding pixel is colored. The fragment shader may be used for color filling of each pixel in an image/a video/a graphic (for example, adding a filter effect to the video, which is actually modifying the color filling of each pixel in the video). A quantity of computations performed by the fragment shader is the same as a quantity of pixels in an image. The fragment shader performs the computations in parallel for all pixels to obtain colors. In this way, each pixel obtains a color value.

Main tasks of the per-fragment operation include: determining visibility of each fragment through a clipping test, a transparency test, a template test and a depth test, and merging a color value of a fragment that passes all tests with a color stored in a color buffer. There are two main manners to merge, one is to directly perform color replacement, and the other is to perform blending (blend). A developer may choose to enable/disable a blending function. If the blending function is disabled, the color replacement is performed directly in a merge phase. If the blending function is enabled, the GPU extracts a source color and a target color, and blends the two colors. The source color is the color obtained for the fragment after the fragment shader performs the computation, and the target color is a color that already exists in the color buffer.

After the aforementioned processing, a resulting image is displayed on the screen. The color displayed on the screen is the color in the color buffer. Data stored in the color buffer may be referred to as a color attachment.

A frame buffer may further include a depth buffer and a template buffer other than the color buffer. The depth buffer stores a depth value (z-coordinate) of a vertex. The depth value may be the z-coordinate obtained for the vertex in the clipping phase. Data stored in the depth buffer may be referred to as a depth attachment. The per-fragment operation includes a process referred to as a template test. The template test is used to limit a primitive area to be drawn. This is implemented by creating a matrix based on a width and height of a window. The matrix consists of 0s and 1s. An area consisting of 1s indicates that a matched primitive needs to be submitted to a subsequent process for testing and drawing. A fragment in an area consisting of 0s is directly discarded, to implement a filtering function. A video memory area in which the 0 and 1 numerical matrix is located is referred to as the template buffer.

Sizes of the memories occupied by the color buffer and the depth buffer are associated with resolution of the frame buffer and a quantity of bytes of each pixel. The frame buffer is a direct map of a picture displayed on the screen, also referred to as a bitmap (Bitmap) or raster. Each storage unit of the frame buffer corresponds to one pixel on the screen, and the entire frame buffer corresponds to one frame of image. Therefore, the resolution of the frame buffer is usually equal to resolution of a viewport (viewport). The viewport represents a computer graphics area that is currently visible. For example, if the resolution of the viewport is 1920×1080, a size of the image displayed on the screen is 1920×1080. If the resolution of the viewport is 1920×1080, the resolution of the frame buffer is 1920×1080. It is assumed that resolution of a color attachment and resolution of a depth attachment are also 1920×1080, and that a size of each pixel is 4 bytes. The color buffer and the depth buffer each need about 7.9 megabytes (megabytes, MB) of space. When a render pass starts, the GPU needs to read, from the memory, the data stored in the color buffer and the depth buffer. Then, in the render pass process, the data needs to be written onto the color buffer and the depth buffer. Therefore, in one frame of one render pass, the size of the data to be copied is 7.9 × 4 = 31.6 MB. If a frame rate is 100 frames per second (frames per second, FPS), data per second will reach 14.8 gigabits per second (gigabits per second, Gbps).

The graphics pipeline eventually learns through computation that all pixels on the screen need to be stored at a place. This place is the frame buffer. The data in the frame buffer is read by a display to refresh for display. The OpenGL may have a plurality of frame buffers. When a window is created, the OpenGL automatically creates a default frame buffer dedicated to rendering and displaying the window. The frame buffer mainly includes three types of buffers: color buffer, depth buffer, and template buffer.

In the process of processing data using the graphics pipeline, sometimes only a result that is of the vertex shading phase and that is output by the vertex shader needs to be obtained, and processed data obtained in the subsequent phase of the graphics pipeline is not necessary. However, based on an integrity requirement of the graphics pipeline, data input into the graphics pipeline needs to execute all phases included in the graphics pipeline. In other words, the GPU still needs to perform the rasterization and pixel processing phases, even if only the data output from the vertex shader needs to be obtained, and the computations in the rasterization and pixel processing phases are meaningless. Moreover, when the default frame buffer is used, a large quantity of invalid memory copy operations are caused. The technical solutions provided in this application can reduce invalid operations while meeting the integrity requirement of the graphics pipeline.

New feature transform feedback (transform feedback) is added in the OpenGL ES 3.0. A main function of transform feedback is to obtain the output data (primitive) processed by the vertex shader and store the obtained output data. The output data obtained by using the transform feedback may be stored in a buffer. This buffer may be sampled, and is referred to as the transform feedback buffer (transform feedback buffer). In the technical solutions of this application, this feature is used. The graphics pipeline is used to submit a large quantity of vectors or matrices to the GPU for parallel processing, to achieve a purpose of reducing load on a CPU side.

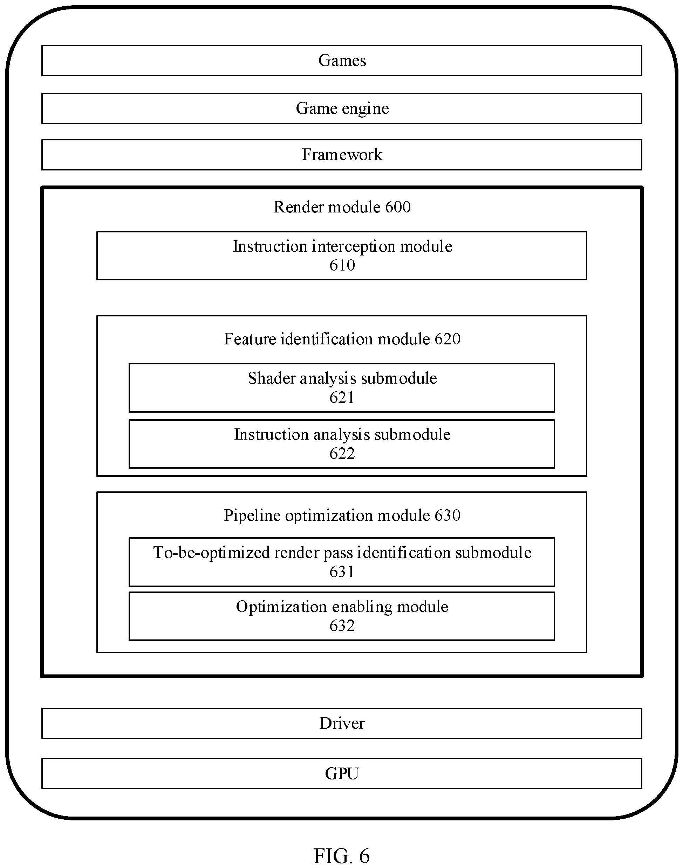

FIG. 6 is a diagram of a system architecture according to an embodiment of this application.

In a system framework shown in FIG. 6, based on an application, a render module 600 configured to implement the image rendering method provided in this application is added between a framework (framework) layer and a driver layer.

It may be understood that the application in this embodiment of this application is an application that needs a GPU to perform rendering. For example, the application may be application software or a game. A computer device in this embodiment of this application is a computer device that can run the application, and the computer device includes a CPU and a GPU. In some embodiments, the computer device may be a portable computer device, for example, a mobile phone or a tablet computer. An example embodiment of the portable computer device includes but is not limited to a portable electronic device using iOS^{®}, Android^{®}, Microsoft^{®}, or another operating system. The portable computer device may alternatively be another portable computer device, for example, a laptop computer (laptop) or the like. It should be further understood that in some other embodiments, the computer device may not be the portable computer device but a desktop computer. The method in embodiments of this application may be implemented by a computer device or a component in a computer device (CPU and GPU, or a chip or a system-on-chip (system-on-chip, SOC) including the CPU and the GPU).

In some embodiments, the render module 600 may include an instruction interception module 610, a feature identification module 620, and a pipeline optimization module 630.

The instruction interception module 610 is configured to intercept a graphics application programming interface (application programming interface, API) of the application.

The feature identification module 620 includes a shader analysis submodule 621 and an instruction analysis submodule 622. The shader analysis submodule 621 is configured to determine, based on the graphics API instruction intercepted by the instruction interception module 610, a vertex shader and a fragment shader used by a render pass, and analyze the vertex shader and the fragment shader, to determine if the vertex shader and fragment shader in the render pass meet an optimization condition. The instruction analysis submodule 622 is configured to analyze the graphics API instruction intercepted by the instruction interception module 610, to determine whether the graphics API instruction meets the optimization condition. The instruction analysis submodule 622 may perform call analysis and parameter analysis on the graphics API instruction, to determine whether the graphics API instruction meets the optimization condition.

The pipeline optimization module 630 includes a to-be-optimized render pass identification submodule 631 and an optimization enabling module 632. The to-be-optimized identification pass submodule 631 is configured to identify whether the render pass is optimizable. The optimization enabling module 632 is configured to optimize a viewport and a frame buffer attachment of the optimizable render pass. Viewport optimization is used to reduce resolution of the viewport. This can reduce a quantity of computations performed by the fragment shader, thereby reducing unnecessary computational overheads. Frame buffer attachment optimization is used to adjust resolution of the color attachment and resolution of the depth attachment, and also reduce a size of a single pixel. This can reduce an amount of data read/written by the GPU from/onto the memory during rendering, thereby reducing unnecessary memory reads and writes.

In some other embodiments, the render module 600 may include the instruction interception module 610 and a pipeline optimization module 630. In other words, in these embodiments, the render module 600 does not need to include the feature identification module 620. In these embodiments, the operation of determining whether the render pass is optimizable may be implemented by a provider (developer) of the application. The provider of the application may predetermine an optimizable render pass and a non-optimizable render pass in the application, and then build a determining result into the application in a form of a render pass trustlist and/or a render pass blocklist, or push the determining result in a form of a patch to the computer device on which the application is installed. In this case, the render pass identification submodule 631 in the pipeline optimization module 631 may directly determine, based on the render pass trustlist and/or the render pass blocklist, whether the to-be-optimized render pass is an optimizable render pass.

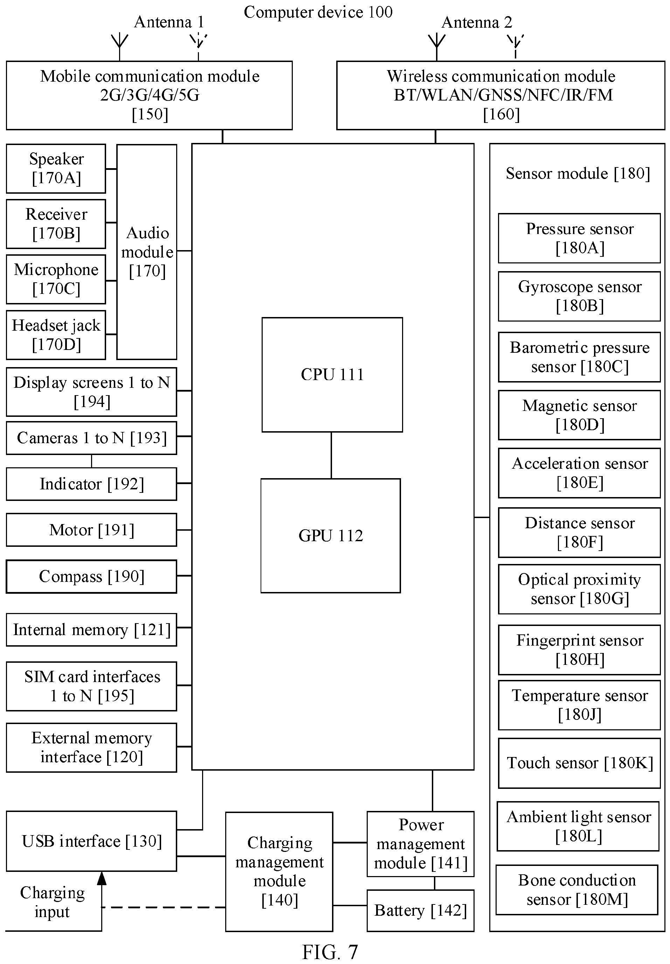

For example, FIG. 7 is a diagram of a structure of a computer device 100. The computer device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display screen 194, a subscriber identity module (subscriber identity module, SIM) card interface 195, and the like.

It may be understood that the structure shown in this embodiment of this application does not constitute a specific limitation on the computer device 100. In some other embodiments of this application, the computer device 100 may include more or fewer components than those shown in the figure, or some components may be combined, or some components may be split, or there may be a different component layout. The components shown in the figure may be implemented by hardware, software, or a combination of software and hardware.

The processor 110 may include a CPU 111 and a GPU 112. In some embodiments, the processor 110 may further include an application processor (application processor, AP), an image signal processor (image signal processor, ISP), a controller, a video codec, a digital signal processor (digital signal processor, DSP), a baseband processor, and/or a neural-network processing unit (neural-network processing unit, NPU), other than the CPU 111 and the GPU 112. Different processing units may be independent components, or may be integrated into one or more processors. In some embodiments, the computer device 100 may alternatively include one or more processors 110. The controller may generate an operation control signal based on instruction operation code and a time sequence signal, to complete control of instruction fetching and instruction execution. In some other embodiments, a memory may be disposed in the processor 110, and is configured to store instructions and data. For example, the memory in the processor 110 may be a cache. The memory may store instructions or data that has been used or cyclically used by the processor 110. If the processor 110 needs to use the instructions or the data again, the processor 110 may directly invoke the instructions or the data from the memory. This avoids repeated access and reduces waiting time of the processor 110, thereby improving data processing or instruction execution efficiency of the computer device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that complies with a USB standard specification, and may be specifically a Mini USB interface, a Micro USB interface, a USB Type C interface, or the like. The USB interface 130 may be configured to connect to a charger to charge the computer device 100, or may be configured to transmit data between the computer device 100 and a peripheral device. The USB interface 130 may alternatively be configured to connect to a headset, and play audio by using the headset.

It may be understood that an interface connection relationship between the modules shown in this embodiment of this application is merely an example for description, and does not constitute a structural limitation on the computer device 100. In some other embodiments of this application, the computer device 100 may alternatively use an interface connection manner different from that in the foregoing embodiment, or a combination of a plurality of interface connection manners. The computer device 100 implements a display function by using the GPU 121, the display screen 194, the application processor, and the like. The GPU 121 is a microprocessor for image processing, and is connected to the display screen 194 and the application processor. The GPU 121 is configured to perform mathematical and geometric computation, and render an image. The processor 110 may include one or more GPUs 121, which execute program instructions to generate or change display information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the computer device 100 may include one or a plurality of display screens 194.

In some embodiments of this application, when the display panel is a material, for example, an OLED, an AMOLED, or a FLED, the display screen 194 in FIG. 7 is bendable. Herein, that the display screen 194 is bendable means that the display screen may be bent to any angle at any part, and may be held at the angle. For example, the display screen 194 may be folded left and right from the middle. Alternatively, the display screen 194 may be folded up and down from the middle. The display screen 194 of the computer device 100 may be a flexible screen. Currently, the flexible screen has attracted much attention because of its unique characteristics and great potential. Compared with a conventional screen, the flexible screen features strong flexibility and bendability, can provide a user with a new interaction manner based on the bendability characteristic, and can meet more requirements of the user for a computer device. For a computer device with a foldable display screen, the foldable display screen on the computer device may switch between a small screen in a folded form and a large screen in an unfolded form at any time. Therefore, the user also uses a split-screen function more frequently on the computer device with the foldable display screen.

The external memory interface 120 may be configured to connect to an external memory card, for example, a micro SD card, to expand a storage capability of the computer device 100. The external memory card communicates with the processor 110 through the external memory interface 120, to implement a data storage function. For example, files such as music or videos are stored in the external storage card.

The internal memory 121 may be configured to store one or more computer programs. The one or more computer programs include instructions. The processor 110 may run the instructions stored in the internal memory 121, so that the computer device 100 performs a volume control method in some embodiments of this application, various applications, data processing, and the like. The internal memory 121 may include a program storage area and a data storage area. The program storage area may store an operating system. The program storage area may further store one or more applications (for example, Gallery, Contacts, Games, or the like). The data storage area may store data (for example, a photo, a contact, or the like) created in a process of using the computer device 100. In addition, the internal memory 121 may include a high-speed random access memory, or may include a nonvolatile memory, for example, one or more magnetic disk storage components, a flash memory component, or a universal flash storage (universal flash storage, UFS). In some embodiments, the processor 110 may run the instructions stored in the internal memory 121 and/or the instructions stored in the memory that is disposed in the processor 110, to enable the computer device 100 to perform the image rendering method provided in embodiments of this application, other applications, and data processing.

The touch sensor 180K is also referred to as a "touch panel". The touch sensor 180K may be disposed on the display screen 194, and the touch sensor 180K and the display screen 194 constitute a touchscreen, which is also referred to as a "touchscreen". The touch sensor 180K is configured to detect a touch operation performed on or near the touch sensor 180K. The touch sensor may transfer the detected touch operation to the application processor, to determine a touch event type. A visual output related to the touch operation may be provided through the display screen 194. In some other embodiments, the touch sensor 180K may alternatively be disposed on a surface of the computer device 100, and is located at a location different from that of the display screen 194.

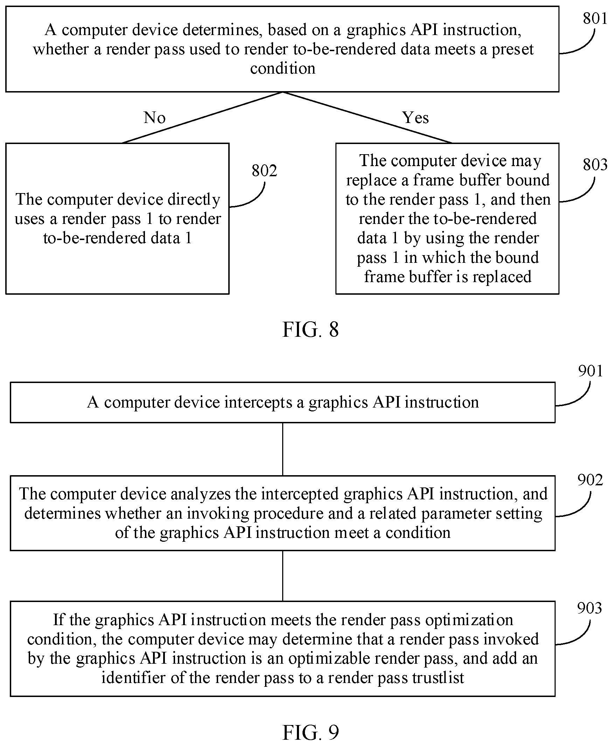

The following describes an image rendering method used in embodiments of this application with reference to FIG. 8 and FIG. 9.

FIG. 8 is a schematic flowchart of an image rendering method according to an embodiment of this application.

801: A computer device determines, based on a graphics API instruction, whether a render pass used to render to-be-rendered data meets a preset condition.

The graphics API instruction is a graphics API instruction generated by an application run on the computer device. For ease of description, the to-be-rendered data in step 801 is referred to as to-be-rendered data 1, and the render pass used to render the to-be-rendered data 1 is referred to as a render pass 1.

802: If the render pass 1 does not meet the preset condition, the computer device directly uses the render pass 1 to render the to-be-rendered data 1. In this case, an output result of the render pass 1 is a rendering result for the to-be-rendered data 1.

803: If the render pass 1 meets the preset condition, the computer device may replace a frame buffer bound to the render pass 1, and then render the to-be-rendered data 1 by using the render pass 1 in which the bound frame buffer is replaced. For ease of description, the render pass 1 in which the bound frame buffer is replaced may be referred to as a render pass 2. The frame buffer bound to the render pass 1 is referred to as a frame buffer 1, and a frame buffer bound to the render pass 2 is referred to as a frame buffer 2. In this case, output data of a vertex shader in the render pass 2 may be obtained by using feedback transform. The output data may be used as the rendering result for the to-be-rendered data 1. For ease of description, the output data obtained in step 803 may be referred to as a rendering result 1.

If a next render pass (which may be referred to as a render pass 3) needs to use the rendering result 1, the rendering result 1 may be used as input data of the render pass 3.

For ease of description, in the following, a render pass that meets the preset condition mentioned in step 801 is referred to as an optimizable render pass and a render pass that does not meet the preset condition mentioned in step 801 is referred to as a non-optimizable render pass.

In some embodiments, resolution of the frame buffer 2 is less than resolution of the frame buffer 1. In other words, when the render pass 1 is the optimizable render pass, the frame buffer (namely, the frame buffer 1) bound to the render pass 1 may be replaced with a frame buffer (namely, the frame buffer 2) with smaller resolution. It may be understood that if there is no frame buffer 2 currently, the frame buffer 2 may be created, and the frame buffer 2 is bound to the render pass 1. If frame buffer 2 has been created, the frame buffer 2 is directly bound to the render pass 1.

As described above, the resolution of the frame buffer is also associated with a quantity of computations performed by a fragment shader in the render pass. A quantity of computations performed by the fragment shader is the same as a quantity of pixels in an image. Therefore, the quantity of computations performed by the fragment shader is the same as resolution of the frame buffer. If the resolution of the frame buffer is 1920×1080, the fragment shader needs to perform 1920×1080 computations in total. In the foregoing technical solution, whether the render pass can be used to relieve CPU performance pressure may be determined by determining whether the render pass meets the preset condition. Relieving the CPU performance pressure is mainly implemented by the vertex shader in the render pass. Therefore, an output result of the vertex shader is a processing result that is expected to be obtained for the vertex data. However, due to an integrity requirement of a graphics pipeline, all processes of the render pass need to be fully performed. Moreover, because the vertex shader has already output the required processing result, how a program after the vertex shader in the render pass processes the data is not concerned. Therefore, in the technical solution, for the optimizable render pass, the quantity of computations performed by the fragment shader in the render pass may be reduced by reducing the resolution of the frame buffer, to reduce meaningless computations, thereby reducing GPU computational overheads. In addition, resolution of a viewport of the render pass 2 may be set to the same as the resolution of the frame buffer 2.

In general, resolution of a color attachment of a frame buffer and resolution of a depth attachment of the frame buffer are usually less than or equal to resolution of the frame buffer. Therefore, when the resolution of the bound frame buffer is reduced, the resolution of a color attachment and resolution of a depth attachment of the frame buffer are correspondingly adjusted. In some embodiments, resolution of a color attachment of the frame buffer 2 is less than or equal to the resolution of the frame buffer 2, and resolution of a depth attachment of the frame buffer 2 is less than or equal to the resolution of the frame buffer 2.

If resolution of the color attachment is 1920×1080, color values of 1920×1080 pixels need to be read from/written onto a memory. Therefore, reducing the resolution of the color attachment may effectively reduce a total amount of data that needs to be read from the memory. This can reduce meaningless memory read and write overheads.

Similarly, if resolution of the depth attachment is 1920×1080, depth values of 1920×1080 pixels need to be read from/written onto the memory. Therefore, reducing the resolution of the depth attachment may effectively reduce a total amount of data that needs to be read from the memory. This can reduce meaningless memory read and write overheads.

In some embodiments, the resolution of the frame buffer 2 may be set to 1×1, the resolution of the color attachment of the frame buffer 2 may be set to 1×1, and the resolution of the depth attachment of the frame buffer 2 may be set to 1×1. In this way, the fragment shader may perform only one computation and read a color value and a depth value of only one pixel. In this way, the quantity of computations of the fragment shader can be effectively reduced, and the GPU computational overheads and the meaningless memory read and write overheads can be reduced.

In some embodiments, the frame buffer 1 may be stored, so that when the frame buffer needs to be restored, the frame buffer bound to the render pass 1 may be restored to the frame buffer 1.

It may be understood that if resolution of the frame buffer 1 is N×M (N and M are positive integers), as long as the resolution of the frame buffer 2 is less than N×M, the quantity of computations of the fragment shader may be reduced. Therefore, replacing the frame buffer 1 with the frame buffer 2 with 1×1 resolution is only one implementation of reducing the resolution of the frame buffer. In other implementations, the resolution of the frame buffer 2 may alternatively be set to another value, for example, 1×2, 2×1, or 2×2.

Similarly, as long as the resolution of the color attachment of the frame buffer 2 is less than the resolution of the color attachment of the frame buffer 1, the amount of data read from the memory can be reduced. In other implementations, a size of the color attachment of the frame buffer 2 may alternatively be set to another value, for example, 1×2, 2×1, or 2×2. In general, the resolution of the color attachment of the frame buffer 2 is less than or equal to the resolution of the frame buffer 2.

Similarly, as long as the resolution of the depth attachment of the frame buffer 2 is less than the resolution of the depth attachment of the frame buffer 1, the amount of data read from the memory can be reduced. In other implementations, a size of the depth attachment of the frame buffer 2 may alternatively be set to another value, for example, 1×2, 2×1, or 2×2. In general, the resolution of the depth attachment of the frame buffer 2 is less than or equal to the resolution of the frame buffer 2.

In some other embodiments, a size of storage space occupied by a single pixel in the frame buffer 2 may be less than a size of storage space occupied by a single pixel in the frame buffer 1. A size of storage space occupied by a single pixel is associated with a size of storage space occupied by a single pixel in the color attachment and a size of storage space occupied by a single pixel in the depth attachment. Therefore, a size of storage space occupied by a color value of the single pixel in the color attachment may be reduced, and/or a size of storage space occupied by a depth value of the single pixel in the depth attachment may be reduced.

For example, in some embodiments, a format of the color attachment of the frame buffer 2 may be set to RGBA8. In this way, each pixel needs only 32 bits (bits) of storage space.

In some other embodiments, the format of the color attachment of the frame buffer 2 may be RGB 1 or RGB 4. This can further reduce the storage space occupied by the single pixel.

In some embodiments, a format of the depth attachment of the frame buffer 2 may be set to D24S8. In this way, each pixel needs only 32 bits of storage space.

In some other embodiments, the format of the depth attachment of the frame buffer 2 may be set to D24X8 or X4S4. In this way, in depth attachments in these formats, each pixel also needs only 32 bits of storage space.

In some other embodiments, the format of the depth attachment of the frame buffer 2 may be D16 or D15 S1. This can further reduce the storage space occupied by the single pixel.

It is assumed that the resolution of the color attachment and the resolution of the depth attachment of the frame buffer 2 are set to 1×1, the format of the color attachment is RGBA8, and the format of the depth attachment is D24S8. In this case, for each pixel, a color buffer and a depth buffer each need 4 bytes. In one frame of the render pass 1, a size of data to be copied is 16 bytes. If a frame rate is 60 FPS, data per second is only 7.5 gigabits per second (kilo bits per second, kbps). It can be learned that the memory read and write overheads caused by meaningless data read and write can be effectively reduced by reducing the storage space occupied by the single pixel.

In some embodiments, the computer device may store a render pass trustlist. All render passes in the render pass trustlist are optimizable render passes. Each render pass may have one identifier. The render pass trustlist stores an identifier of an optimizable render pass. The computer device may determine an identifier of the render pass 1 from the graphics API instruction, and determine whether the identifier of the render pass 1 is in the render pass trustlist. If the identifier of the render pass 1 is in the render pass trustlist, the computer device may determine that the render pass 1 may be the optimizable render pass that meets the preset condition. If the identifier of the render pass 1 is not in the render pass trustlist, the computer device may determine that the render pass 1 is a non-optimizable render pass that does not meet the preset condition.

FIG. 1 is used as an example. An Arabic numeral following RenderPass in FIG. 1 is an identifier of a render pass. For example, in FIG. 1, an identifier of a first render pass is 0, and an identifier of a second render pass is 1.

The following describes how to determine a render pass trustlist with reference to FIG. 9.

FIG. 9 is a schematic flowchart of determining a render pass trustlist according to an embodiment of this application.

901: A computer device intercepts a graphics API instruction.

The graphics API instruction intercepted by the computer device is a graphics API instruction generated by an application run on the computer device.

902: The computer device analyzes the intercepted graphics API instruction, and determines whether an invoking procedure and a related parameter setting of the graphics API instruction meet the following conditions.
Condition 1: The graphics API instruction is used to invoke a render pass to render data.
Condition 2: Resolution of a viewport of the render pass is not less than preset resolution.
Condition 3: A frame buffer bound to the render pass includes a color attachment.
Condition 4: A shader program used by each draw call in the render pass is optimizable.
Condition 5: Each draw call in the graphics API instruction corresponds to a preset instruction.

The following separately describes the condition 1 to the condition 5.

Condition 1: The graphics API instruction is used to invoke a render pass to render data.

The method shown in FIG. 9 is to determine whether a render pass is an optimizable render pass. Therefore, it is required to determine that the graphics API instruction is an instruction for invoking the render pass to render the data. If the graphics API instruction is not the instruction for invoking the render pass, there is no need to determine the subsequent conditions.

An instruction related to a frame buffer may be used to determine whether the graphics API instruction is a graphics API instruction used to invoke the render pass. For example, if the bound frame buffer is a default frame buffer, it may be determined that the render pass starts. In this case, it may be determined that the graphics API instruction is a graphics API instruction used to invoke the render pass.

For example, in OpenGL ES, glBindFramebuffer is used to bind a named frame buffer object. If the graphics API instruction includes the function glBindFramebuffer, it may be considered that the graphics API instruction is a graphics API instruction used to call the render pass. It is assumed that the graphics API instruction intercepted by the computer device includes instructions shown in table 2.

**Table 2**

| | |
|---|---|
| 1 | glBindBufferBase(target=GL_TRANSFORM_FEEDBACK_BUFFER, index=0, buffer=300) |
| 2 | glUseProgram(program=579) |
| 3 | glBindBufferBase(target=GL_UNIFORM_BUFFER, index=0, buffer=2307) |
| 4 | glBindBuffer(target=GL_ARRAY_BUFFER, buffer=2000) |
| 5 | glVertexAttribPointer(index=0, size=3, type=GL_FLOAT, normalized=GL_FALSE, stride=40, pointer=NULL) |
| 6 | glVertexAttribPointer(index=1, size=3, type=GL_FLOAT, normalized=GL_FALSE, stride=40, pointer=0xc) |
| 7 | glBindBuffer(target=GL_ARRAY_BUFFER, buffer=286) |
| 8 | glVertexAttribPointer(index=2, size=4, type=GL_UNSIGNED_INT, stride=32, pointer=0x 10) |
| 9 | glVertexAttribPointer(index=3, size=4, type=GL_FLOAT, normalized=GL_FALSE, stride=32, pointer=NULL) |
| 10 | glBindBuffer(target=GL_ARRAY_BUFFER, buffer=2000) |
| 11 | glVertexAttribPointer(index=4, size=4, type=GL_FLOAT, normalized=GL_FALSE, stride=40, pointer=0x18) |
| 12 | glBeginTransformFeedback(primitiveMode=GL_POINTS) |
| 13 | glDrawArrays(mode=GL_POINTS, first=0, count=13763) |
| 14 | glEndTransformFeeback() |
| 15 | glBindFramebuffer(target=GL_DRAW_FRAMEBUFFER, framebuffer=0) |
| 16 | glViewpoint(x=0, y=0, width=1782, height=828) |
| 17 | glScissor(x=0, y=0, width=1782, height=828) |

In the instructions shown in the table 2, the 15^{th} line of code includes the function glBindFramebuffer(target=GL_DRAW_FRAMEBUFFER, framebuffer=0), where framebuffer=0. This indicates that the default frame buffer is bound. In this case, it may be determined that the render pass meets the condition 1.

Condition 2: A size of a viewport of the render pass is not less than preset resolution.

The preset resolution may be a default resolution of a frame buffer bound to the render pass. The default resolution of the frame buffer is usually not less than resolution of a current display interface of the computer device. For example, it is assumed that the maximum resolution supported by the display interface of a display apparatus of the computer device is 1920×1080, the default resolution of the frame buffer may be greater than or equal to 1920×1080. If the resolution of the display interface of the display apparatus of the computer device is reduced to 1280×720, the default resolution of the frame buffer may be adjusted to 1280×720.

The instructions shown in the table 2 are still used as examples. It is assumed that the screen resolution of a screen of the computer device running the application is 1782×828. In the instructions shown in the table, based on the 16^{th} line of instruction, it may be determined that the size of the viewport of the render pass is 1782×828. In this case, it may be determined that the render pass meets the condition 2.

Condition 3: A frame buffer bound to the render pass includes a color attachment (color attachment).

As defined in OpenGL, a complete frame buffer object has at least one color attachment, otherwise the frame buffer cannot be used. Therefore, it is required to check whether the frame buffer object of the render pass includes a color attachment.

The instructions shown in the table 2 are still used as examples. The default frame buffer is bound to the render pass. Therefore, it may be determined whether the default frame buffer includes the color attachment. For ease of description, in the following embodiment, it is assumed that as shown in the instructions shown in the table 2, the default frame buffer bound to the render pass includes the color attachment.

Condition 4: A shader program in the render pass is optimizable.

The shader program corresponds to one vertex shader and one fragment shader.

In some embodiments, the computer device may store a shader program trustlist. The shader program trustlist includes an identifier of an optimizable shader program. If the identifier of the shader program of the render pass is in the shader program trustlist, it may be determined that the shader program included in the render pass is optimizable.

In some other embodiments, the computer device may include a shader program trustlist and a shader program blocklist. The shader program trustlist includes an identifier of an optimizable shader program, and the shader program blocklist includes an identifier of a non-optimizable shader program. If the identifier of the shader program of the render pass is in the shader program trustlist, it may be determined that the shader program included in the render pass is optimizable. If the identifier of the shader program of the render pass is in the shader program blocklist, it may be determined that the shader program included in the render pass is non-optimizable. If the identifier of the shader program of the render pass is neither in the shader program trustlist nor in the shader program blocklist, it may be determined whether the vertex shader and fragment shader corresponding to the shader program are optimizable. If both the vertex shader and the fragment shader corresponding to the shader program are optimizable, it may be determined that the shader program is optimizable, and the identifier of the shader program may be added to the shader program trustlist. If at least one of the vertex shader or the fragment shader corresponding to the shader program is non-optimizable, it may be determined that the shader program is non-optimizable, and the identifier of the shader program may be added to the shader program blocklist. The instructions shown in the table 2 are still used as examples. In the instructions shown in the table 2, the second line of instruction shows that the identifier of the shader program used in the render pass is 579. It is assumed that the shader program with the identifier 579 is in the shader program trustlist. It may be determined that the render pass meets the condition 4.

An optimizable vertex shader meets the following conditions.
Condition 1: Source code of the vertex shader includes a plurality of variables modified by a keyword out.
Condition 2: Source code of the vertex shader includes a plurality of variables modified by a keyword in.
Condition 3: Source code of the vertex shader uses conditional statements such as if-else conditional statements.

If a vertex shader meets the three conditions, it may be determined that the vertex shader is optimizable. If a vertex shader cannot meet any one or more of the three conditions, it may be determined that the vertex shader is non-optimizable.

In some embodiments, an identifier of the optimizable vertex shader may be added to a vertex shader trustlist. In some other embodiments, an identifier of the non-optimizable vertex shader may be added to a vertex shader blocklist.

For example, table 3 shows some of the source code of the vertex shader.

**Table 3**

| | |
|---|---|
| 1 | layout(location=0) in vec3 in_vertex; |
| 2 | layout(location=1) in vec3 in_normal; |
| 3 | layout(location=2) in ivec3 in_boneIndices; |
| 4 | layout(location=3) in vec4 in_boneWeights; |
| 5 | layout(location=4) in vec4 in_tangent; |
| 6 | out vec3 out_pos; |
| 7 | out vec3 out_normal; |
| 8 | out vec3 ourt_tangent; |
| 9 | uniform MtxBlock {(vec4 bones [max_bone_count*3];) Matrices; |
| 10 | void main(void) |
| 11 | { vect inpose = vect (in_vertex.xyz, 1.0); |
| 12 | mat4 locationToWorldMatrix = GET_MATRIX (in_boneIndices.x)*in_boneWeights[0]; |
| 13 | if(in_boneWeights[1]>0.0) |
| 14 | localToWorldMatrix += GET_MATRIX (in_boneIndices.y)*in_boneWeights[1]; |
| 15 | if(in_boneWeights[2]>0.0) |
| 16 | localToWorldMatrix += GET_MATRIX (in_boneIndices.z)*in_boneWeights[2]; |
| 17 | if(in_boneWeights[3]>0.0) |
| 18 | localToWorldMatrix += GET_MATRIX (in_boneIndices.w)*in_boneWeights[3]; |
| 19 | out_pos = (inpos*localToWorldMatrix.xyz; |

The source code of the vertex shader shown in the table 3 includes a plurality of input variables modified by in, namely, in vec3 in_vertex, in vec3 in_normal, in ivec3 in_boneIndices, in vec4 in_boneWeights, and in vec4 in_tangent. The source code of the vertex shader also includes a plurality of output variables modified by out, namely, out vec3 out_pos, out vec3 out_normal, and out vec3 ourt_tangent. The vertex shader also uses a plurality of if conditional statements, namely, if(in_boneWeights[1]>0.0), if(in _boneWeights[2]>0.0), and if(in _boneWeights[3]>0.0).

Therefore, it may be determined that the vertex shader is optimizable.

An optimizable fragment shader meets the following conditions.
Condition 1: Source code of the fragment shader includes only one variable modified by a keyword out, and a value assigned to the variable is a fixed color value or a constant.
Condition 2: Source code of the fragment shader does not include a variable modified by a keyword in.
Condition 3: Source code of the fragment shader does not use conditional statements such as if-else conditional statements.
Condition 4: Source code of the fragment shader does not have a uniform (uniform) variable and a uniform buffer object (UBO).
Condition 5: The fragment shader does not use a texture modified by a two-dimensional sampler (sampler2D) and does not use a sampler.

If a fragment shader meets the five conditions, it may be determined that the fragment shader is optimizable. If a fragment shader does not meet any one or more of the five conditions, it may be determined that the vertex shader is non-optimizable.

In some embodiments, an identifier of the optimizable fragment shader may be added to a fragment shader trustlist. In some other embodiments, an identifier of the non-optimizable fragment shader may be added to a fragment shader blocklist.

For example, table 4 shows the source code of the fragment shader.

**Table 4**

| | |
|---|---|
| 1 | # version 300 es |
| 2 | precision lowp float; |
| 3 | out vec4 outcol; |
| 4 | void main(void) {outcol = vec4(1.0, 1.0, 1.0, 1.0);} |

The source code of the fragment shader shown in the table 4 does not have the in-modified variable, and has only one out-modified variable out vec4 outcol. A value assigned to the variable is a constant. The source code does not use the conditional statements such as if-else conditional statements, does not have the uniform variable and UBO, and does not use the texture modified by the two-dimensional sampler (sampler2D) and does not use the sampler. Therefore, it may be determined that the fragment shader is optimizable.

Table 5 shows another fragment of source code of the fragment shader.

**Table 5**

| | |
|---|---|
| 1 | uniform vec4_ZBufferParams; |
| 2 | uniform highp sampler2D CameraDepthTexture; |
| 3 | in highp vec2 vs_TEXCOORD0; |
| 4 | in highp vec4 vs_TEXCOORD1 |
| 5 | in highp vec4 vs_TEXCOORD2 |

The source code of the fragment shader shown in the table 5 has a plurality of uniform-modified variables and a plurality of in-modified variables. Therefore, the fragment shader shown in the table 5 is non-optimizable.

For ease of differentiation, the conditions for determining whether the graphics API instruction is met may be collectively referred to as render pass optimization conditions. The conditions for determining whether the vertex shader is optimizable are collectively referred to as vertex shader optimization conditions. The conditions for determining whether the fragment shader is optimizable are collectively referred to as fragment shader optimization conditions.

For ease of description, the variable modified by the keyword out may be referred to as an output variable, and the variable modified by the keyword in may be referred to as an input variable.

In some embodiments, one graphics API instruction may include a plurality of draw calls. In this case, each draw call has a corresponding shader program. Therefore, it is required to determine that the corresponding shader program of each draw call is an optimizable shader program. Condition 5: Each draw call in the graphics API instruction corresponds to a preset instruction. The preset instruction may include a point mode setting instruction and a vertex data write-back instruction.

The computer device may analyze whether a setting instruction for a type of a to-be-rendered primitive is used to set the type of the to-be-rendered primitive to a point. The setting instruction for the type of the to-be-rendered primitive sets the type of the to-be-rendered primitive of the render pass to the point, and in this case, it may be determined that the graphics API instruction includes the point mode setting instruction.

For example, in OpenGL ES, the function glDrawArrays is used to provide a drawing functionality, to extract data from arrays of data to render a basic primitive. If a type of a to-be-rendered primitive in the function glDrawArrays is the point (namely, GL_POINTS), it may be determined that the setting instruction for the type of the to-be-rendered primitive sets the type of the to-be-rendered primitive of the render pass to the point.

The instructions shown in the table 2 are still used as examples. In the instructions shown in the table 2, the 16^{th} line of instruction includes the function glDrawArrays, and a type of a to-be-rendered primitive is the point.

The vertex data write-back instruction is instructions related to transform feedback. The vertex data write-back instruction may include any one or more of the following instructions: an instruction indicating that the transform feedback starts (referred to as a first vertex data write-back instruction) and an instruction indicating that a transform feedback invocation ends (referred to as a second vertex data write-back instruction).

The instructions shown in the table 2 are still used as examples. In the instructions shown in the table 2, the 12^{th} line of instruction is the first vertex data write-back instruction, and the 14^{th} line of instruction is the second vertex data write-back instruction.

As described above, the graphics API instruction shown in the table 2 includes only one draw call. A shader program used by the draw call and a corresponding instruction meet the condition 4 and the condition 5. The instruction shown in the table 2 meets the condition 1 to the condition 3 for one render pass. Therefore, it may be determined that the graphics API instruction shown in the table 2 meets the render pass optimization condition.

In some other embodiments, a graphics API instruction may include a plurality of draw calls. In this case, a shader program invoked by each draw call in the plurality of draw calls needs to meet the condition 4, and each draw call corresponds to a preset instruction, and meets the condition 1 to the condition 3. It may be determined only in this case that the render pass meets the render pass optimization condition. In other words, if the render pass includes the plurality of draw calls, and a shader program invoked by any one or more draw calls in the plurality of draw calls does not meet the condition 4, or an instruction corresponding to the one or more draw calls does not include the preset instruction, it may be determined that the render pass does not meet the render pass optimization condition.

903: If the graphics API instruction meets the render pass optimization condition, the computer device may determine that the render pass invoked by the graphics API instruction is the optimizable render pass, and add an identifier of the render pass to the render pass trustlist.

In some embodiments, for a to-be-optimized application (application, APP), the computer device may first learn the render pass trustlist. For example, for to-be-rendered first N frames of images of the application, the computer device may determine, based on the method shown in FIG. 9, whether a render pass used in a rendering process to render each frame of image can be added to the render pass trustlist. From an (N+1)^{th} frame, the computer device may directly determine whether the render pass invoked by the graphics API instruction is in the render pass trustlist.

It may be understood that a larger value of N indicates a more accurate trustlist determined by the computer device, but a render pass may be optimized based on the trustlist later. A smaller value of N indicates that the computer device may optimize a render pass based on the trustlist sooner, but may miss some optimizable render passes.

In the method shown in FIG. 9, the computer device determines the render pass trustlist based on the render pass optimization condition.

The method shown in FIG. 9 for identifying the optimizable render pass may also be represented by using the flowchart shown in FIG. 7.

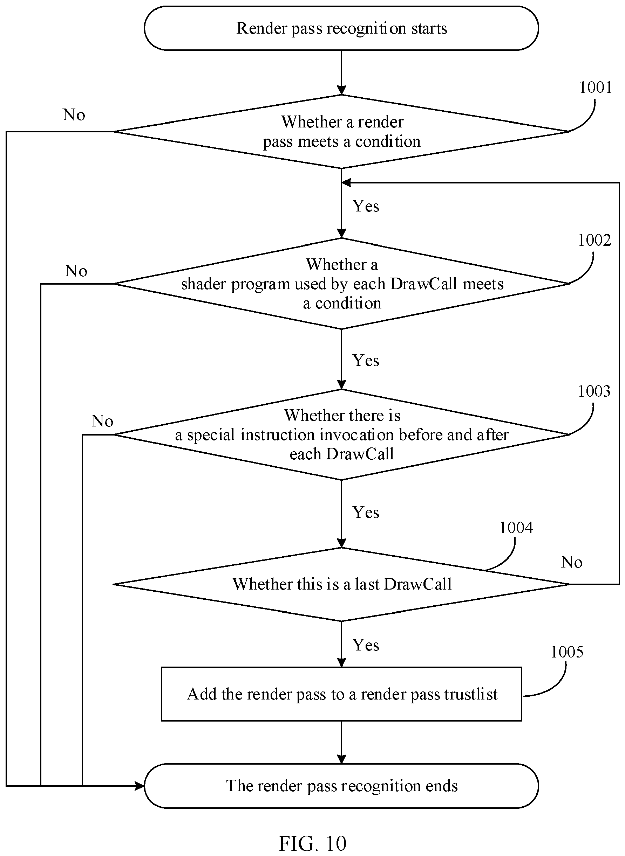

FIG. 10 is another flowchart of identifying an optimizable render pass according to an embodiment of this application.

1001: Determine whether a render pass meets a condition.

The determining whether a render pass meets a condition in step 1001 may include: determining whether resolution of a viewport of the render pass is not less than preset resolution, and determining that a frame buffer object of the render pass includes a color attachment.

1002: Determine whether a shader program used by each draw call meets a condition.

For example, in some embodiments, the determining whether a shader program used by each draw call meets a condition may include determining whether the shader program used by each draw call is in a shader program trustlist. If the shader program used by each draw call is in the shader trustlist, it may be determined that the shader program used by each draw call meets the condition. If a shader program used by one or more draw calls is not in the shader program trustlist, it may be determined that the condition is not met.

For another example, in some other embodiments, the determining whether a shader program used by each draw call meets a condition may include: determining whether a vertex shader used by each draw call is in a vertex shader trustlist and whether a fragment shader used by each draw call is in a fragment shader trustlist. If the vertex shader used by each draw call is in the vertex shader trustlist and the fragment shader used by each draw call is in the fragment shader trustlist, it may be determined that the shader program used by each draw call meets the condition. If a vertex shader used by one or more draw calls is not in the vertex shader trustlist, or if a fragment shader used by one or more draw calls is not in the fragment shader trustlist, it may be determined that the shader program used by each draw call does not meet the condition.

For another example, in some other embodiments, the determining whether a shader program used by each draw call meets a condition may include determining whether a vertex shader used by each draw call meets a vertex shader optimization condition and whether a fragment shader used by each draw call meets a fragment shader optimization condition. If the vertex shader used by each draw call meets the vertex shader optimization condition and the fragment shader used by each draw call meets the fragment shader optimization condition, it may be determined that the shader program used by each draw call meets the condition. If a vertex shader used by one or more draw calls does not meet the vertex shader optimization condition, or if a fragment shader used by one or more draw calls does not meet the fragment shader optimization condition, it may be determined that the shader program used by each draw call does not meet the condition.

For specific processes of determining whether the vertex shader meets the vertex shader optimization condition and determining whether the fragment shader meets the fragment shader optimization condition, refer to the embodiment shown in FIG. 9. For brevity, details are not described herein again.

1003: Determine whether there is a special instruction invocation before and after each draw call. The special instruction invocation includes a transform feedback instruction and an instruction indicating that a type of a to-be-rendered primitive is a point. For a specific instruction type, refer to the method shown in FIG. 9.

1004: Determine whether this is a last draw call.

The determining whether this is a last draw call means whether the determining steps are performed on the last draw call, in other words, determining whether the used shader program meets the condition and determining whether there is the special instruction invocation before and after the draw call.

1005: Add the render pass to a render pass trustlist.

In some other embodiments, a computer device may further determine a render pass blocklist based on a render pass optimization condition. In this case, the computer device may determine, based on the render pass blocklist, whether the render pass can be used for rendering. The render pass 1 in FIG. 8 is still used as an example. If the render pass blocklist includes the identifier of the render pass 1, the computer device may determine that the render pass 1 is a non-optimizable render pass. In this case, the computer device may perform step 802. If the render pass blocklist does not include the identifier of the render pass 1, the computer device may determine that the render pass 1 is an optimizable render pass. In this case, the computer device may perform step 803.

In some other embodiments, a computer device may determine a render pass blocklist and a render pass trustlist based on a render pass optimization condition. In this case, the computer device may determine, based on the render pass trustlist and the render pass blocklist, whether the render pass can be used for rendering. The render pass 1 in FIG. 8 is still used as an example. If the render pass blocklist includes the identifier of the render pass 1, the computer device may determine that the render pass 1 is a non-optimizable render pass. In this case, the computer device may perform step 802. If the render pass blocklist does not include the identifier of the render pass 1 and the render pass trustlist includes the identifier of the render pass 1, the computer device may determine that the render pass 1 is an optimizable render pass. In this case, the computer device may perform step 803. If neither the render pass blocklist nor the render pass trustlist includes the identifier of the render pass 1, the computer device may determine, based on the render pass optimization condition, whether the render pass 1 is optimizable. If it is determined that the render pass 1 is optimizable, the identifier of the render pass 1 may be added to the render pass trustlist. If it is determined that the render pass 1 is non-optimizable, the identifier of the render pass 1 may be added to the render pass blocklist.

As described above, the render pass trustlist and/or the render pass blocklist may alternatively be provided by a provider of the application. For example, the provider of the application may determine the render pass trustlist in advance based on the method shown in FIG. 9 or FIG. 10, and then build the determined render pass trustlist into the application or push, in a manner of updating the application, the determined render pass trustlist to the computer device as a patch of the application. In this way, the computer device may directly use the render pass trustlist to determine whether the render pass is optimizable.

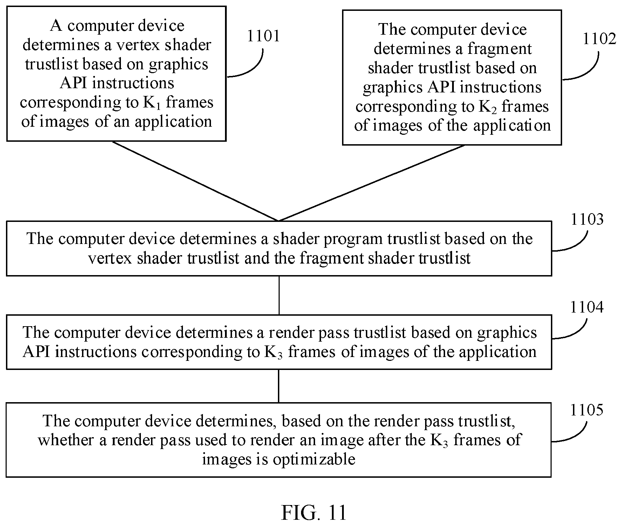

Similarly, the vertex shader trustlist and/or the vertex shader blocklist may be determined by the computer device running the application, or may be determined by the provider of the application. The fragment shader trustlist and/or the fragment shader blocklist may be determined by the computer device running the application, or may be determined by the provider of the application. FIG. 11 is a schematic flowchart of an image rendering method according to an embodiment of this application. In the method shown in FIG. 11, a vertex shader trustlist, a fragment shader trustlist, and a render pass trustlist are all implemented by a computer device running an application.
1101: A computer device determines a vertex shader trustlist based on graphics API instructions corresponding to K₁ frames of images of an application. K₁ is a positive integer.
1102: The computer device determines a fragment shader trustlist based on graphics API instructions corresponding to K₂ frames of images of the application. K₂ is a positive integer.
1103: The computer device determines a shader program trustlist based on the vertex shader trustlist and the fragment shader trustlist.
1104: The computer device determines a render pass trustlist based on graphics API instructions corresponding to K₃ frames of images of the application. K₃ is a positive integer.
1105: The computer device determines, based on the render pass trustlist, whether a render pass used to render an image after the K₃ frames of images is optimizable.

In some embodiments, K₁ is equal to K₂, and K₃ is greater than K₁. For example, the computer device may determine the vertex shader trustlist and the fragment shader trustlist based on the first 50 frames of images of the application. Moreover, the computer device may further determine a part of the render pass trustlist based on the first 50 frames of images of the application. For example, if the computer device determines that the render pass used to render a 16^{th} frame of image is the optimizable render pass, the computer device may add the render pass to the render pass trustlist. After determining the vertex shader trustlist and the fragment shader trustlist, the computer device may determine the shader program trustlist. After determining the shader program trustlist, the computer device determines the render pass trustlist based on graphics API instructions corresponding to a 51^{st} frame of image to a 100^{th} frame of image. In a process of determining the render pass trustlist based on the 51^{st} frame to the 100^{th} frame, the computer device may directly use the determined shader program trustlist to determine whether the shader program in the render pass trustlist of the 51^{st} frame to the 100^{th} frame is optimizable, and does not need to determine, based on code of the vertex shader and the fragment shader, whether the shader program is optimizable. From a 101^{st} frame of image, the computer device may directly determine, based on the determined render pass trustlist, whether the render pass is optimizable, and optimize/not optimize the render pass based on a determining result.

In some other embodiments, K₁ may not be equal to K₂, but K₃ is greater than K₁ and K₂. For example, the computer device may determine the vertex shader trustlist based on the first 50 frames of images of the application, and determine the fragment shader trustlist based on the first 80 frames of the application. Moreover, the computer device may further determine a part of the render pass trustlist based on the first 80 frames of images of the application. After determining the vertex shader trustlist and the fragment shader trustlist, the computer device may determine the shader program trustlist. After determining the shader program trustlist, the computer device determines the render pass trustlist based on graphics API instructions corresponding to a 51^{st} frame of image to a 100^{th} frame of image. In a process of determining the render pass trustlist based on the 51^{st} frame to the 100^{th} frame, the computer device may directly use the determined shader program trustlist to determine whether the shader program in the render pass trustlist of the 51^{st} frame to the 100^{th} frame is optimizable, and does not need to determine, based on code of the vertex shader and the fragment shader, whether the shader program is optimizable. From a 101^{st} frame of image, the computer device may directly determine, based on the determined render pass trustlist, whether the render pass is optimizable, and optimize/not optimize the render pass based on a determining result.

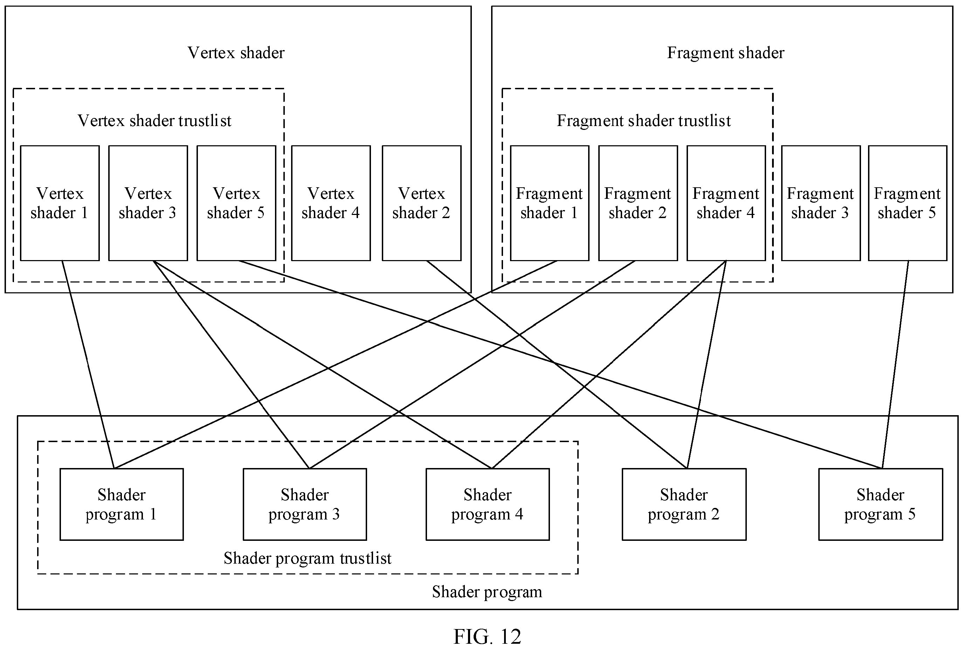

FIG. 12 shows a process of determining a shader program trustlist. One shader program corresponds to one vertex shader and one fragment shader. As shown in FIG. 12, a vertex shader corresponding to each shader in a shader program 1, a shader program 3, and a shader program 4 is in a vertex shader trustlist, and a fragment shader corresponding to each of the three shader programs is in a fragment shader trustlist. Therefore, the shader program 1, the shader program 3, and the shader program 4 are in the shader program trustlist. Although a fragment shader 4 corresponding to the shader program 2 is in the fragment shader trustlist, a vertex shader 2 corresponding to the shader program 2 is not in the vertex shader trustlist. Therefore, the shader program 2 is not in the shader program trustlist. Similarly, although a vertex shader 5 corresponding to a shader program 5 is in the vertex shader trustlist, a fragment shader 5 corresponding to the shader program 5 is not in the fragment shader trustlist. Therefore, the shader program 5 is not in the shader program trustlist.

The following uses a specific rendering process as an example to describe the technical solution of this application.

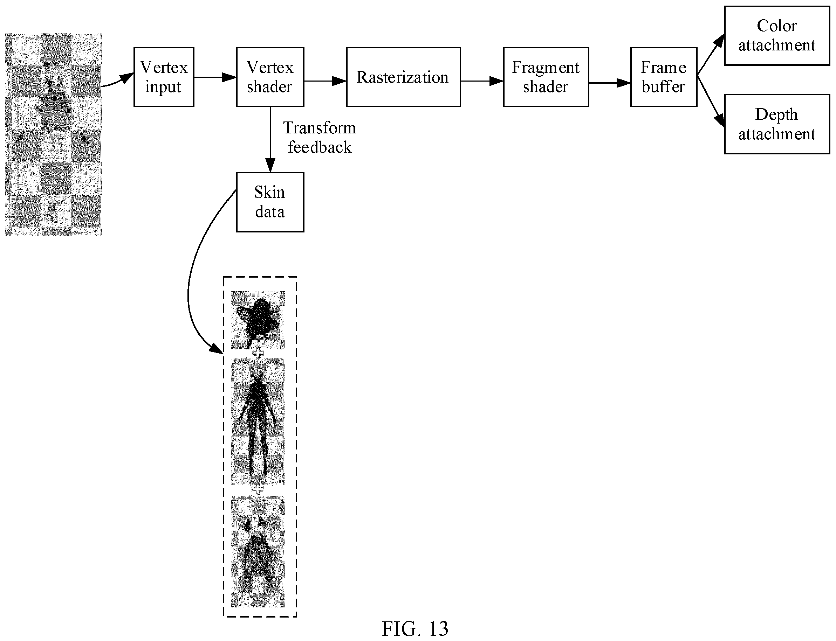

FIG. 13 is a diagram of generating skin data by using a skin render pass.

By analyzing a skin render pass, it may be determined that the skin render pass is an optimizable render pass. Therefore, resolution of a viewport may be set to 1×1, resolution of a color attachment is set to 1×1, resolution of a depth attachment is set to 1×1, a format of the color attachment is set to RGB8, and a format of the depth attachment is set to D24S8.

As shown in FIG. 13, data of a body model is input as vertices, and a vertex shader program processes the body model and outputs skin data. The skin data output by the vertex shader program includes skin data of a hat of a character, skin data of the body of the character, and skin data of clothes of the character.

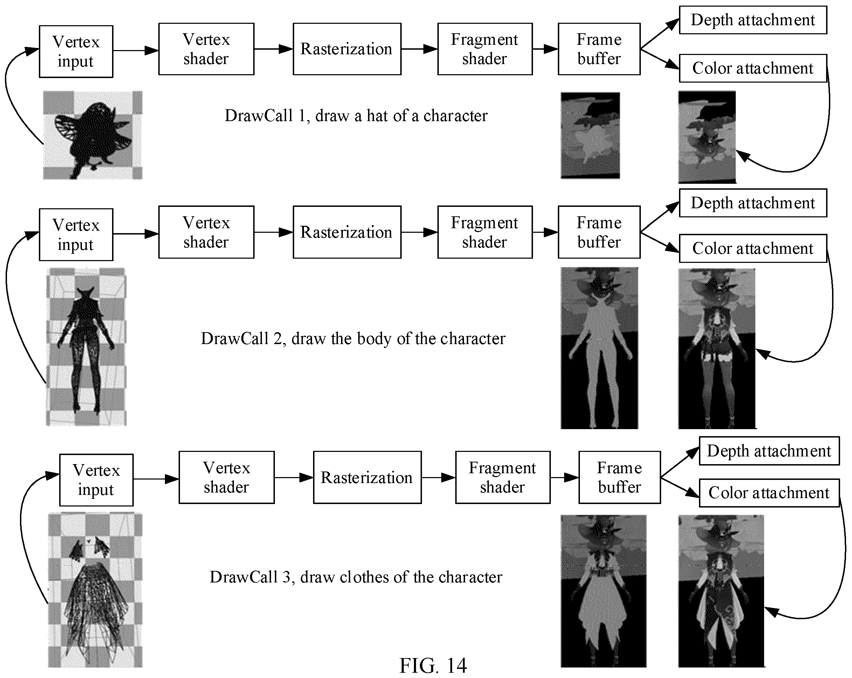

FIG. 14 is a flowchart of completing character drawing in a main scene render pass based on skin data generated by using a skin render pass.

It can be learned that a main scene render pass in FIG. 14 only needs to use skin data output from a vertex shader. Therefore, only an output result of the vertex shader in the skin render pass needs to be considered. A fragment shader and a frame buffer in skin render pass do not affect on the output result of the vertex shader. However, based on an integrity requirement of the render pass, all processes of the render pass need to be fully executed. Therefore, a quantity of computations performed by the fragment shader may be reduced by reducing resolution of the frame buffer, to achieve a purpose of reducing GPU computational overheads. Moreover, a size of storage space occupied by one pixel may be reduced by setting formats of the color attachment and the depth attachment. This can reduce memory read and write operations, and reduce memory bandwidth overheads.

Embodiments of this application further provide an electronic apparatus. The electronic apparatus includes a CPU and a GPU. The CPU is configured to determine, based on a graphics API instruction, that a first render pass used to render to-be-rendered data meets a preset condition. The CPU is further configured to replace a first frame buffer as a frame buffer bound to the first render pass with a second frame buffer. Resolution of the second frame buffer is less than resolution of the first frame buffer and resolution of a color attachment and resolution of a depth attachment of the second frame buffer are less than or equal to the resolution of the second frame buffer, and/or a size of storage space occupied by a single pixel in the second frame buffer is less than a size of storage space occupied by a single pixel in the first frame buffer. The GPU is configured to render the to-be-rendered data by using a second render pass, and obtain output data of a vertex shader in the second render pass. The second render pass is the first render pass in which the bound frame buffer is replaced with the second frame buffer.

Optionally, in some embodiments, the electronic apparatus may be a computer device. The computer device may be a computer device, for example, a personal computer, a notebook computer, a tablet computer, or a mobile phone.

Optionally, in some other embodiments, the electronic apparatus may be a chip or a system-on-chip.

For specific functions and beneficial effects of the CPU and the GPU, refer to the foregoing embodiments. For brevity, details are not described herein again.

Embodiments of this application further provide a chip system. The chip system includes a logic circuit. The logic circuit is configured to be coupled to an input/output interface. The logic circuit is configured to determine, based on a graphics API instruction, that a first render pass used to render to-be-rendered data meets a preset condition. The logic circuit is further configured to replace a first frame buffer as a frame buffer bound to the first render pass with a second frame buffer. Resolution of the second frame buffer is less than resolution of the first frame buffer and resolution of a color attachment and resolution of a depth attachment of the second frame buffer are less than or equal to the resolution of the second frame buffer, and/or a size of storage space occupied by a single pixel in the second frame buffer is less than a size of storage space occupied by a single pixel in the first frame buffer. The logic circuit is further configured to send setting information of a second render pass and the to-be-rendered data to a graphics processing unit through the input/output interface. The second render pass is the first render pass in which the bound frame buffer is replaced with the second frame buffer. The chip system may be the CPU in the foregoing embodiments.

Embodiments of this application provide a computer-readable storage medium. The computer-readable storage medium stores program code. When the computer storage medium is run on a computer, the computer is enabled to perform the method shown in the foregoing embodiment. Embodiments of this application provide a computer program product. The computer program product includes computer program code. When the computer program code is run on a computer, the computer is enabled to perform the method shown in the foregoing embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly learn that, for the purpose of convenient and brief description, for a specific working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image rendering method, comprising:
determining, based on a graphics application programming interface API instruction, that a first render pass used to render to-be-rendered data meets a preset condition;
replacing a first frame buffer as a frame buffer bound to the first render pass with a second frame buffer, wherein resolution of the second frame buffer is less than resolution of the first frame buffer and resolution of a color attachment and resolution of a depth attachment of the second frame buffer are less than or equal to the resolution of the second frame buffer, and/or a size of storage space occupied by a single pixel in the second frame buffer is less than a size of storage space occupied by a single pixel in the first frame buffer; and
rendering the to-be-rendered data by using a second render pass, and obtaining output data of a vertex shader in the second render pass, wherein the second render pass is the first render pass in which the bound frame buffer is replaced with the second frame buffer.

2. The method according to claim 1, wherein the resolution of the second frame buffer is 1×1, the resolution of the color attachment of the second frame buffer is 1×1, and the resolution of the depth attachment of the second frame buffer is 1×1.

3. The method according to claim 1 or 2, wherein a size of storage space occupied by a color value of a single pixel in the color attachment of the second frame buffer is less than a size of storage space occupied by a color value of a single pixel in a color attachment of the first frame buffer, and/or
a size of storage space occupied by a depth value of a single pixel in the depth attachment of the second frame buffer is less than a size of storage space occupied by a depth value of a single pixel in a depth attachment of the first frame buffer.

4. The method according to any one of claims 1 to 3, wherein the determining that a first render pass used to render to-be-rendered data meets a preset condition comprises:
determining that the first render pass is one of render passes comprised in a render pass trustlist.

5. The method according to any one of claims 1 to 4, wherein
resolution of a viewport of the first render pass is not less than a preset resolution threshold;
the frame buffer bound to the first render pass comprises a color attachment;
a shader program used by each draw call in the first render pass is optimizable, wherein the shader program corresponds to one fragment shader and one vertex shader; and
each draw call in the first render pass corresponds to a preset instruction.

6. The method according to claim 5, wherein the preset instruction comprises a point mode setting instruction and a vertex data write-back instruction, the point mode setting instruction indicates that a type of a to-be-rendered primitive is a point, and the vertex data write-back instruction is used to obtain and store output data of the vertex shader.

7. The method according to claim 5 or 6, wherein the fragment shader has only one output variable whose assigned value is a fixed color value or a constant;
the fragment shader does not have an input variable;
the fragment shader does not use a conditional statement;
the fragment shader does not have a uniform variable and a uniform buffer object UBO; and
the fragment shader does not use a texture modified by a two-dimensional sampler and does not use a sampler.

8. The method according to any one of claims 5 to 7, wherein the vertex shader comprises a plurality of input variables;
the vertex shader further comprises a plurality of output variables; and
the vertex shader further comprises a conditional statement.

9. An electronic apparatus, wherein the electronic apparatus comprises a central processing unit CPU and a graphics processing unit GPU, wherein
the CPU is configured to determine, based on a graphics application programming interface API instruction, that a first render pass used to render to-be-rendered data meets a preset condition;
the CPU is further configured to replace a first frame buffer as a frame buffer bound to the first render pass with a second frame buffer, wherein resolution of the second frame buffer is less than resolution of the first frame buffer and resolution of a color attachment and resolution of a depth attachment of the second frame buffer are less than or equal to the resolution of the second frame buffer, and/or a size of storage space occupied by a single pixel in the second frame buffer is less than a size of storage space occupied by a single pixel in the first frame buffer; and
the GPU is configured to: render the to-be-rendered data by using a second render pass, and obtain output data of a vertex shader in the second render pass, wherein the second render pass is the first render pass in which the bound frame buffer is replaced with the second frame buffer.

10. The electronic apparatus according to claim 9, wherein the resolution of the second frame buffer is 1×1, the resolution of the color attachment of the second frame buffer is 1×1, and the resolution of the depth attachment of the second frame buffer is 1×1.

11. The electronic apparatus according to claim 9 or 10, wherein a size of storage space occupied by a color value of a single pixel in the color attachment of the second frame buffer is less than a size of storage space occupied by a color value of a single pixel in a color attachment of the first frame buffer, and/or
a size of storage space occupied by a depth value of a single pixel in the depth attachment of the second frame buffer is less than a size of storage space occupied by a depth value of a single pixel in a depth attachment of the first frame buffer.

12. The electronic apparatus according to any one of claims 9 to 11, wherein the CPU is specifically configured to determine that the first render pass is one of render passes comprised in a render pass trustlist.

13. The electronic apparatus according to any one of claims 9 to 12, wherein
resolution of a viewport of the first render pass is not less than a preset resolution threshold;
the frame buffer bound to the first render pass comprises a color attachment;
a shader program used by each draw call in the first render pass is optimizable, wherein the shader program corresponds to one fragment shader and one vertex shader; and
each draw call in the first render pass corresponds to a preset instruction.

14. The electronic apparatus according to claim 13, wherein the preset instruction comprises a point mode setting instruction and a vertex data write-back instruction, the point mode setting instruction indicates that a type of a to-be-rendered primitive is a point, and the vertex data write-back instruction is used to obtain and store output data of the vertex shader.

15. The electronic apparatus according to claim 13 or 14, wherein the fragment shader has only one output variable whose assigned value is a fixed color value or a constant;
the fragment shader does not have an input variable;
the fragment shader does not use a conditional statement;
the fragment shader does not have a uniform variable and a uniform buffer object UBO; and
the fragment shader does not use a texture modified by a two-dimensional sampler and does not use a sampler.

16. The electronic apparatus according to any one of claims 13 to 15, wherein the vertex shader comprises a plurality of input variables;
the vertex shader further comprises a plurality of output variables; and
the vertex shader further comprises a conditional statement.

17. A chip system, wherein the chip system comprises a logic circuit, wherein the logic circuit is configured to be coupled to an input/output interface;
the logic circuit is configured to determine, based on a graphics application programming interface API instruction, that a first render pass used to render to-be-rendered data meets a preset condition;
the logic circuit is further configured to replace a first frame buffer as a frame buffer bound to the first render pass with a second frame buffer, wherein resolution of the second frame buffer is less than resolution of the first frame buffer and resolution of a color attachment and resolution of a depth attachment of the second frame buffer are less than or equal to the resolution of the second frame buffer, and/or a size of storage space occupied by a single pixel in the second frame buffer is less than a size of storage space occupied by a single pixel in the first frame buffer; and
the logic circuit is further configured to send setting information of a second render pass and the to-be-rendered data to a graphics processing unit through the input/output interface, wherein the second render pass is the first render pass in which the bound frame buffer is replaced with the second frame buffer.

18. The chip system according to claim 17, wherein the resolution of the second frame buffer is 1×1, the resolution of the color attachment of the second frame buffer is 1×1, and the resolution of the depth attachment of the second frame buffer is 1×1.

19. The chip system according to claim 18 or 10, wherein a size of storage space occupied by a color value of a single pixel in the color attachment of the second frame buffer is less than a size of storage space occupied by a color value of a single pixel in a color attachment of the first frame buffer, and/or
a size of storage space occupied by a depth value of a single pixel in the depth attachment of the second frame buffer is less than a size of storage space occupied by a depth value of a single pixel in a depth attachment of the first frame buffer.

20. The chip system according to any one of claims 17 to 19, wherein the logic circuit is specifically configured to determine that the first render pass is one of render passes comprised in a render pass trustlist.

21. The chip system according to any one of claims 17 to 20, wherein
resolution of a viewport of the first render pass is not less than a preset resolution threshold;
the frame buffer bound to the first render pass comprises a color attachment;
a shader program used by each draw call in the first render pass is optimizable, wherein the shader program corresponds to one fragment shader and one vertex shader; and
each draw call in the first render pass corresponds to a preset instruction.

22. The chip system according to claim 21, wherein the preset instruction comprises a point mode setting instruction and a vertex data write-back instruction, the point mode setting instruction indicates that a type of a to-be-rendered primitive is a point, and the vertex data write-back instruction is used to obtain and store output data of the vertex shader.

23. The chip system according to claim 21 or 22, wherein the fragment shader has only one output variable whose assigned value is a fixed color value or a constant;
the fragment shader does not have an input variable;
the fragment shader does not use a conditional statement;
the fragment shader does not have a uniform variable and a uniform buffer object UBO; and
the fragment shader does not use a texture modified by a two-dimensional sampler and does not use a sampler.

24. The chip system according to any one of claims 21 to 23, wherein the vertex shader comprises a plurality of input variables;
the vertex shader further comprises a plurality of output variables; and
the vertex shader further comprises a conditional statement.
